# EUROPEAN PATENT SPECIFICATION

(11) **EP 0 658 399 B1**
(45) Date of publication and mention of the grant of the patent: **07.04.1999**
(21) Application number: 94830472.0
(22) Date of filing: 04.10.1994
(51) Int. Cl.: B23Q 3/12, B29C 57/04

(54) **An automatic rapid-attachment chuck device for attaching axially insertable chucks to machine chuck heads in bell-forming machines for thermoplastic pipes**
Schnellkupplungseinrichtung für axial einsteckbaren Dorn für eine Muffenherstellungsmaschine für Kunststoffrohre
Dispositif de connection rapide de mandrins insérables axialement pour machine de tulipage de tubes thermoplastiques

(30) Priority: 16.12.1993 IT BO930500
(43) Date of publication of application: 21.06.1995
(73) Proprietor: SICA S.p.A., 48011 Alfonsine (IT)
(72) Inventor: Baratoni, Mauro, I-48011 Alfonsine, Ravenna (IT)
(74) Representative: Lanzoni, Luciano

(56) References cited:
- EP-A- 0 286 553
- WO-A-93/03877
- DE-A- 3 038 674
- DE-B- 1 148 111
- DE-U- 9 309 483
- GB-A- 432 528

## Description

The invention relates to an automatic rapid-attachment chuck device for attaching axially insertable chucks to machine chuckheads in bell-forming machines for thermoplastic pipes. The chucks are removably and projectingly constrained to a fixed support in the machine chuckheads, which support is provided with a flange for connecting the chuck, said flange being provided with through holes for connecting the chuck to the chuckhead (see e.g. GB-A- 432 528).

Bell-forming machines of the above type are equipped with a series of interchangeable chucks, variously shaped, which are combined with heating elements to shape ends of pipes (also of various dimensions) into different geometrical conformations.

In such machines the chucks are connected to the flange by a series of conventional bolts which insert into special holes made in the flange itself, so that the chuck is removable and interchangeable in relation to various operations. The fundamental drawback of this connection system is that the substitution of the chucks requires bolt loosening and tightening operations which slow down production.

Further, in order to achieve an equal tightening of all the bolts, torque wrenches are necessary as is a logical tightening order of the bolts.

The aim of the present invention, as it is characterized in the following claims, is thus to eliminate the above-mentioned drawbacks.

The invention solves the problem by providing an automatic chuck rapid-connection device comprising the features of the preamble of claim 1, which further comprises:
- a plate affording at least two circumferential keyhole slots of varying breadth and being at least rotatingly constrained to a fixed support such as to be rotatably mobile in relation to the flange;
- at least two pins, provided with heads fixed to the chuck facing towards the flange and with the heads of the pins arranged projectingly, said heads being conformed such as to be able to transit freely through the holes in the flange and through the slots in the plate in a chuck mounting position on the chuck head wherein the plate is arranged in a first extreme rotation position with respect to the flange; said heads interfering geometrically with all of the slots in a second extreme position in which the plate is rotated in relation to the first extreme position, such as to resist a detachment of the chuck from the chuck head of the machine;
   means for actuating the rotation of the plate between the first and the second extreme positions.

The fundamental advantage obtained with the present invention consists in the fact that with a single movement of the plate the chuck is connected (or disconnected) to the chuck head of the machine contemporaneously at all of the pins and all of the plate slots. This leads to drastically reduced mounting times, independently of the number of connection points between the chuck and the flange. This renders production much more economical, and leads to the machine's being more easily adapted to different production needs. Further, the conformation of the locking device, as well as the possibility of automating the actuating means moving the plates contributes to obtaining an identical lock of the chuck at all of its points of connection with the flange, without having to use special equipment and with great operative simplicity for the operator responsible for the machine, who only has to command the activation of the device.

Further characteristics and advantages of an embodiment of the present invention will better emerge from the detailed description that follows, of an embodiment of the invention, illustrated in the form of a non-limiting example in the accompanying drawings, in which:
- figure 1 is a total view of a device according to the invention applied to a chuckhead of a forming machine, sectioned at the axis of symmetry of the chuck;
- figure 2 is a total view of the device of figure 1, sectioned according to line II-II of figure 1;
- figure 3 is further embodiment of a detail of the invention, shown in plan view;
- figure 4 is a partial section of a detail of figure 3, sectioned along line III-III of figure 3.

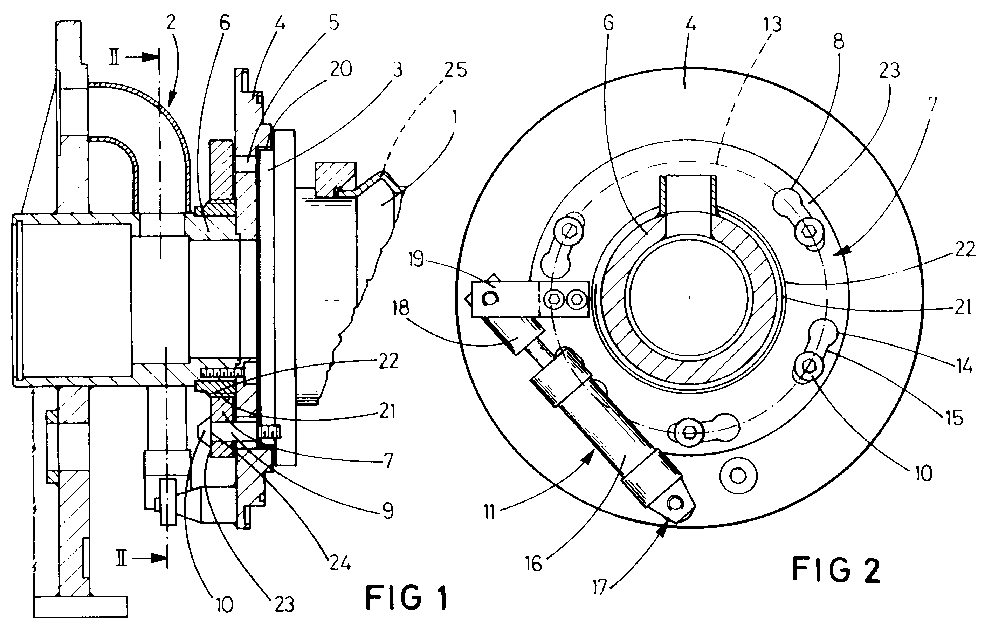

With reference to figure 1, the device consists of an automatic device for rapid connection of a chuck 1 to a chuck head 2 in bell-forming machines, where the chuck is inserted in an axial direction 5 into thermaplastic pipes 25.

The chuck head is provided with a support 6 provided with a flange 4 for connecting the chuck 1, which flange 4 is provided with through holes 5 for connection of the flange 5 to the chuckhead 2, and having the task of supporting the chuck 1 projectingly and hence allowing a pipe 25 to be threaded on to the chuck 1 at the end opposite the chuckhead 2.

To be able to operate on pipes of varying diameters, in a same bell-forming machine the chuck 1 can be removably constrained to the flange 4 and is provided with a central projection 3 which couples with a housing cavity 20 made on the flange 4, so that a correct centring on the chuck head 2 is achieved.

Figure 1 shows how the centring projection 3 is provided with pins 9 screwed thereto, which pins 9 exhibit heads 10 and are supported by the chuck 1 such as to project posteriorly with their heads 10 arranged projectingly towards the chuck heads of the machine.

The device further comprises a plate 7 located poosteriorly to the flange 4, provided with slots 8 arranged along a circumferential arc 13 and being of variable breadth, as can be seen in figure 2.

The plate 7 is constrained coaxially to the support 6 such as to be at least rotatable in relation thereto and is further associable to the pins of the chuck 1 such as to enable to chuck 1 to be mounted and dismounted rapidly from the chuck head 2.

As can be better seen in figures 1 and 2, the heads 10 of the pinns 9 are conformed and dimensioned such as to be able to transit freely through the holes 5 in the flange 4 and through the slots 8 in the plate 7 in a mounting position of the chuck 1 on the chuck head 2 in which the plate 7 is arranged in a first extreme rotation position in relation to the flange 4. In a second extreme position in which the plate 7 is angularly rotated with respect to the first extreme position, the heads 10 interfere geometrically and contemporaneously with the slots 8 of the plates 7, opposing a detachment of the chuck 1 from the chuck head of the machine.

In a preferred embodiment, the plate 7 is ring-conformed and internally exhibits a threaded surface 21 couplable with a corresponding surface 22 of the support 6 such as to be not only rotatable but also translatable there-along.

This is particularly advantageous since as the flange 4 is solid to the support 6, the translation of the plate 7 allows a striker surface 23 contiguous to the heads 10 of the pins 9 to associate with corresponding contiguous surfaces 24 of the heads 10, axially locking the chuck 1 on the head 2 contemporaneously with the rotation of the plate 7.

The plate is further associated to means 11 for actuating the plate 7 rotation between the two extreme positions, which means 11 comprise a linear fluid actuator 16 (using compressed air having a first end 17 which is connected to the chuck head 2 and an opposite second end 18 connected to an arm 19 fixed to the plate 7.

From figure 2 it can be seen that the slots 8 are preferably uniformly distributed along a same arc of circumference 13 of the plate 7 and exhibit a first tract 14 of a breadth corresponding to the breadth of the head 10 of the pins 9, and a second tract 15 having a breadth which corresponds to the breadth of the pns 9.

To ease entrance of the plate 7 into the slots 8 as well as the flange 4 into the holes 5 the heads 10 of the pins 9 exhibit a tapered profile.

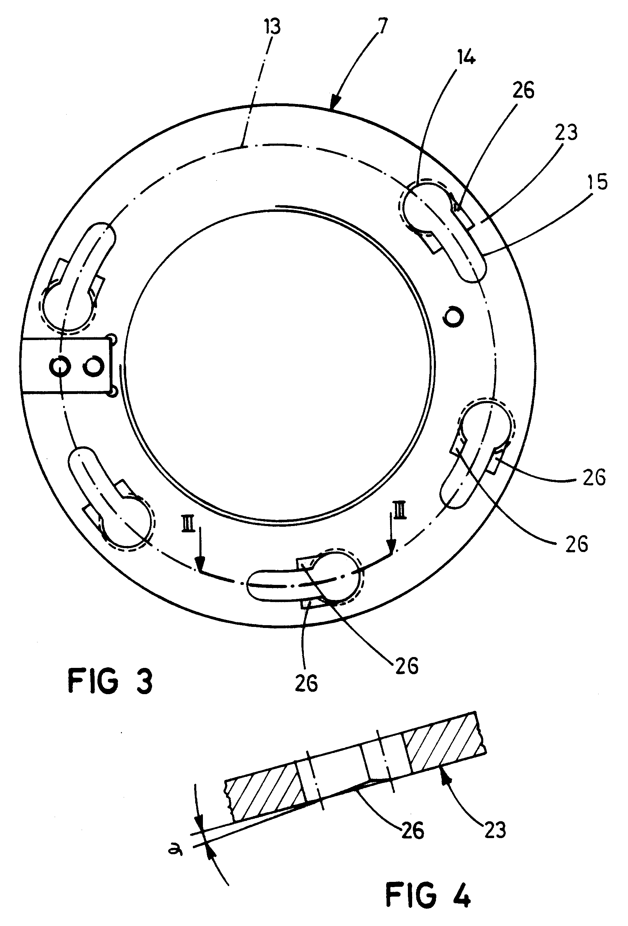

A possible further embodiment of the device of the invention might be as shown in figures 3 and 4, where the plate 7 is constrained to the support 6 such as to be rotatable only with respect thereto: in any case the surface 23 of the plate 7 is slightly inclined (alpha) (about 5 degrees) with respect to the striker surface 24 of the heads 10 of the pins 9, such that during rotation of the plate 7 an adequate axial locking force is impressed on the chuck 1 through the pins 9 to oppose resistence to detachment from the chuck 1 offered by the pipe 25 and caused by radial contraction experienced by said pipe 25 during the cooling process.

Constructively speaking the embodiment is realizable, as shown in figure 3, bu creating on the striker surface 23 of the plate 7 a number of inclined plane 25 situated at least at the first tract 14 of the slots 8. These planes 26 should be subjected to localized thermal treatment to grant them the hardness necessary for limiting wear thereof during repeated use of the device.

Possible further embodiments of the invention can concern for example the number and arrangement of the slots 8, which might be simply two located in diametrically opposite positions on the plate 7, or three arranged at 120 degrees one to another on a cricumference 13 of the plate 7, or might even be in a greater number, and not necessarily arranged on a same circumference 13.

Obviously it would be possible to change the realization of the means 11 for actuating by using incompressible fluid actuators 16 or by using equivalent mechanical systems for impressing rotation about the support on the plate between the extreme positions.

## Claims

1. An automatic rapid-attachment chuck device for attaching axially insertable chucks (1) to machine chuck heads (2) in bell-forming machines for thermoplastic pipes, wherein the chucks (1) are removably and projectingly constrained to a fixed support(6) in the machine chuck heads (2), which support (6) is provided with a flange (4) for connecting the chuck (1), said flange (4) being provided with through holes (5) for connecting the chuck (1) to the chuck head (2), characterized in that it comprises
- a plate (7) affording at least two circumferential keyhole slots (8) of varying breadth and being at least rotatingly constrained to a fixed support (6) such as to be rotatably mobile in relation to the flange (4);
- at least two pins (9), provided with heads (10) fixed to the chuck (1) facing towards the flange (4) and with the heads (10) of the pins (9) arranged projectingly, said heads (10) being conformed such as to be able to transit freely through the holes (5) in the flange (4) and through the slots (8) in the plate in a chuck (1) mounting position on the chuck head (2) wherein the plate (7) is arranged in a first extreme rotation position with respect to the flange (4); said heads (10) interfering geometrically with all of the slots in a second extreme position in which the plate (7) is rotated in relation to the first extreme position, such as to resist a detachment of the chuck (1) from the chuck head (2) of the machine;
means (11) for actuating the rotation of the plate between the first and the second extreme positions.

2. A device as in claim 1, characterized in that the support (6) and the flange (4) are made in a single body.

3. A device as in claim 1, characterized in that the plate (7) is slidably translatable on the support (6), meeting the heads (10) of the pins (9) in such a way as to grip the chuck (1) axially on the chuck head (2).

4. A device as in claims 1 or 3, characterized in that the plate (7) and the support (6) exhibit complementarily threaded surfaces (21, 22) coupled together such as to render the plate (7) and the support (6) reciprocally rotatable and translatable.

5. A device as in claims 1 or 3, characterized in that the plate (7) and the heads (10) of the pins (9) exhibit striker surfaces (23, 24) which are mutually inclined such as to lock the chuck (1) axially on the chuck head (2) during rotation of the plate (7) on the support (6).

6. A device as in claim 1, characterized in that the slots (8) are uniformly distributed on the plate (7).

7. A device as in claim 1, characterized in that each of the slots (8) develops along a circumference are (13) of the plate (7).

8. A device as in claim 1, characterized in that the slot (8) exhibits a first tract (14) having a breadth corresponding to a breadth of the head (10) of the pins (9) and a second tract (15) having a breadth corresponding to a breadth of the pins (9).

9. A device as in claim 1, characterized in that the means (11) for actuating comprise at least one linear fluid actuator (16) having a first end (17) connected to the chuck head (2) and an opposite second end (18) connected to the plate (7).

10. A device as in claim 1, characterized in that the heads (10) of the pins (9) are tapered in order to ease an insertion of the pins (9) into the holes (5) on the flange (4) and into the slots (8) of the plate (7).

11. A device as in claim 5, characterized in that the striker surfaces (23, 24) comprise inclined planes (26) made at least at the first tract (14) of the slots (8).

12. A device as in claim 5, characterized in that the striker surfaces (23, 24) are made only at an edge of the slots (8).

13. A device as in claim 6, characterized in that it comprises at least two slots (8) which are diametrically opposite to one another on the plate (7).

14. A device as in claim 6, characterized in that it comprises three slots (8) arranged at 120 degrees one to another on a circumference (13) of the plate (7).

15. A device, as in claim 6, characterized in that the slots (8) are arranged on more than one circumference (13) of the plate (7).

## Patentansprüche

1. Automatische Schnellkupplungseinrichtung für axial in Bearbeitungsspannköpfe (2) einsetzbare Dorne (1) in Maschinen zum Formen von Muffen in Kunststoffrohren, in welcher die Dorne (1) lösbar und überstehend an einein feststehenden Support (6) der Bearbeitungsspannköpfe (2) gehalten werden, welcher Support (6) mit einem Flansch (4) zum Befestigen des Dorns (1) ausgestattet ist, wobei der genannte Flansch (4) mit durchgehenden Bohrungen (5) zum Anschliessen des Dorns (1) an den Spannkopf (2) versehen ist, **dadurch gekennzeichnet**, dass sie wie folgt enthält:
- eine wenigstens zwei umlaufende schlüssellochförmige Schlitze (8) von veränderlicher Breite aufweisende Platte (7), die wenigstens drehbeweglich an einen feststehenden Support (6) gehalten wird, so dass sie im Verhältnis zum dem Flansch (4) drehbar ist;
- wenigstens zwei mit Köpfen (10) versehene und an dem Dorn (1) befestigte Zapfen (9), die dem Flansch (4) zugewandt und mit den Köpfen (10) der Zapfen (9) selbst hervorstellend angeordnet sind, wobei die genannten Köpfe (10) so ausgebildet sind, dass sie sich frei durch die Bohrungen (5) in dem Flansch (4) und durch die Schlitze (8) in der Platte bewegen können, und zwar in einer Montageposition des Dorns (1) an dem Spannkopf (2), in welcher die Platte (7) im Verhältnis zu dem Flansch (4) in einer ersten extremen Drehposition angeordnet ist; wobei die genannten Köpfe (10) geometrisch in alle Schlitze eingreifen, und zwar in einer zweiten extremen Position, in welcher die Platte (7) im Verhältnis zu der ersten extremen Position gedreht ist, so dass einein Lösen des Dorns (1) von dem Spannkopf (2) der Maschine Widerstand geleistet wird;
- Mittel (11) zum Antreiben der Umdrehung der Platte zwischen der ersten und der zweiten extremen Position.

2. Einrichtung nach Patentanspruch 1, **dadurch gekennzeichnet**, dass der Support (6) und der Flansch (4) in einem einzigen Körper hergestellt sind.

3. Einrichtung nach Patentanspruch 1, **dadurch gekennzeichnet**, dass die Platte (7) gleitend an dem Support (6) verschiebbar ist, wobei sie auf die Köpfe (10) der Zapfen (9) trifft, und zwar auf solche Weise, dass der Dorn (1) axial an dem Spannkopf (2) festgeklemmt wird.

4. Einrichtung nach den Patetansprüchen 1 oder 3, **dadurch gekennzeichnet**, dass die Platte (7) und der Support (6) sich ergänzend mit Gewinden versehene Oberflächen (21, 22) aufweisen, die so miteinander verbunden werden, dass die Platte (7) und der Support (6) gegenseitig zueinander drehverschiebbar sind.

5. Einrichtung nach den Patentansprüchen 1 oder 3, **dadurch gekennzeichnet**, dass die Platte (7) und die Köpfe (10) der Zapfen (9) Anschlagflächen (23, 24) aufweisen, die gegenseitig zueinander geneigt sind, so dass der Dorn (1) während der Umdrehung der Platte (7) an dem Support (6) axial an dem Spannkopf (2) blockiert ist.

6. Einrichtung nach Patentanspruch 1, **dadurch gekennzeichnet**, dass die Schlitze (8) gleichmässig auf der Platte (7) verteilt sind.

7. Einrichtung nach Patentanspruch 1, **dadurch gekennzeichnet**, dass jeder der Schlitze (8) sich entlang einem Kreisumfangsbogen (13) der Platte (7) erstreckt.

8. Einrichtung nach Patentanspruch 1, **dadurch gekennzeichnet**, dass der Schlitz (8) einen ersten Abschnitt (14) aufweist, der eine Breite hat, die einer Breite der Köpfe (10) der Zapfen (9) entspricht, sowie einen zweiten Abschnitt (15) mit einer Breite entsprechend einer Breite der Zapfen (9).

9. Einrichtung nach Patentanspruch 1, **dadurch gekennzeichnet**, dass die Mittel (11) zum Antreiben wenigstens einen linearen Flüssigkeitsantrieb (16) enthalten, welcher ein erstes, an den Spannkopf (2) angeschlossenes Ende (17) aufweist und ein entgegengesetztes zweites Ende (18), das an die Platte (7) angeschlossen ist.

10. Einrichtung nach Patentanspruch 1, **dadurch gekennzeichnet**, dass die Köpfe (10) der Zapfen (9) verjüngt sind, und zwar zu dein Zweck, das Einsetzen der Zapfen (9) in die Bohrungen (5) in dem Flansch (4) und die Schlitze (8) in der Platte (7) zu erleichtern.

11. Einrichtung nach Patentanspruch 5, **dadurch gekennzeichnet**, dass die Anschlagflächen (23, 24) geneigte Ebenen (26) enthalten, eingearbeitet wenigstens an dem ersten Abschnitt (14) der Schlitze (8).

12. Einrichtung nach Patentanspruch 5, **dadurch gekennzeichnet**, dass die Anschlagflächen (23, 24) nur an einer Kante der Schlitze (8) eingearbeitet sind.

13. Einrichtung nach Patentanspruch 6, **dadurch gekennzeichnet**, dass sie wenigstens zwei Schlitze (8) enthält, die sich diametral gegenüberliegend an der Platte (7) angeordnet befinden.

14. Einrichtung nach Patentanspruch 6, **dadurch gekennzeichnet**, dass sie drei Schlitze (8) enthält, die um 120° zueinander und entlang einem Kreisumfang (13) der Platte (7) angeordnet sind.

15. Einrichtung nach Patentanspruch 6, **dadurch gekennzeichnet**, dass die Schlitze (8) an mehr als einem Kreisumfang (13) der Platte (7) angeordnet sind.

## Revendications

1. Un dispositif automatique de connection rapide de mandrins pour connecter des mandrins (1) insérables axialement à des têtes (2) de machines de tulipage de tubes thermoplastiques, dans lequel les mandrins (1) sont amovibles et fixés en saillie à un support fixe (6) dans les têtes (2), lequel support (6) est pourvu d'une flange (4) pour connecter le mandrin (1), ladite flange (4) étant pourvue d'orifices passants (5) pour connecter le mandrin (1) à la tête (2), caractérisé en ce qu'il comprend
- une plaque (7) présentant au moins deux fentes (8) circonférentielles en forme de trou de serrure de largeur variable et étant au moins fixée rotativement à un support fixe (6) de manière à être mobile en rotation par rapport à la flange (4);
- au moins deux goupilles (9), pourvues de têtes (10) fixées au mandrin (1), orientées vers la flange (4) et avec les têtes (10) des goupilles (9) disposées en saillie, lesdites têtes (10) étant conformées de manière à pouvoir transiter librement au travers des orifices (5) dans la flange (4) et au travers des fentes (8) dans la plaque dans une position de montage du mandrin (1) sur la tête (2) dans laquelle la plaque (7) est disposée dans une première position extrème de rotation par rapport à la flange (4); lesdites têtes (10) interférant géométriquement avec toutes les fentes dans une seconde position extrème dans laquelle la plaque (7) est pivotée par rapport à la première position extrème, de manière à s'opposer au détachement du mandrin (1) de la tête (2) de la machine;
des moyens (11) pour actionner la rotation de la plaque entre la première et la seconde position extrème.

2. Un dispositif selon la revendication 1, caractérisé en ce que le support (6) et la flange (4) sont réalisés en une seule pièce.

3. Un dispositif selon la revendication 1, caractérisé en ce que la plaque (7) peut translater par glissement sur le support (6), rencontrant les têtes (10) des goupilles (9) de manière à serrer le mandrin (1) axialement sur la tête (2).

4. Un dispositif selon les revendications 1 ou 3, caractérisé en ce que la plaque (7) et le support (6) présentent des surfaces (21, 22) complémentairement filetées accouplées entre elles de manière à rendre la plaque (7) et le support (6) réciproquement pivotables et translatables.

5. Un dispositif selon les revendications 1 ou 3, caractérisé en ce que la plaque (7) et les têtes (10) des goupilles (9) présentent des surfaces (23, 24) de contact mutuellement inclinées de manière à serrer axialement le mandrin (1) sur la tête (2) pendant la rotation de la plaque (7) sur le support (6).

6. Un dispositif selon la revendication 1, caractérisé en ce que les fentes (8) sont uniformément distribuées sur la plaque (7).

7. Un dispositif selon la revendication 1, caractérisé en ce que chacune des fentes (8) se développe le long d'un arc (13) circonférentiel de la plaque (7).

8. Un dispositif selon la revendication 1, caractérisé en ce que les fentes (8) présentent une première portion (14) ayant une largeur correspondant à la largeur de la tête (10) des goupilles (9) et une seconde portion (15) ayant une largeur correspondant à la largeur des goupilles (9).

9. Un dispositif selon la revendication 1, caractérisé en ce que les moyens (11) d'actionnement comprennent au moins un actionneur linéaire à fluide (16) ayant une première extrémité (17) reliée à la tête (2) et une seconde extrémité (18) opposée reliée à la plaque (7).

10. Un dispositif selon la revendication 1, caractérisé en ce que les têtes (10) des goupilles (9) ont une forme conique de manière à faciliter une insertion des goupilles (9) dans les orifices (5) de la flange (4) et dans les fentes (8) de la plaque (7).

11. Un dispositif selon la revendication 5, caractérisé en ce que les surfaces de contact (23, 24) comprennent des plans inclinés (26) réalisés au moins sur la première portion (14) des fentes (8).

12. Un dispositif selon la revendication 5, caractérisé en ce que les surfaces de contact (23, 24) sont réalisées seulement sur un bord des fentes (8).

13. Un dispositif selon la revendication 6, caractérisé en ce qu'il comprend au moins deux fentes (8) diamétralement opposées à d'autres fentes sur la plaque (7).

14. Un dispositif selon la revendications 6, caractériséen ce qu'il comprend trois fentes (8) disposées à 120 degrés l'une de l'autre sur une circonférence (13) de la plaque (7).

15. Un dispositif selon la revendication 6, caractérisé en ce que les fentes (8) sont disposées sur plus d'une circonférence (13) de la plaque (7).
